**Europäisches Patentamt**

**European Patent Office**

**Office européen des brevets**

(11) Numéro de publication: **0 207 866**
**A1**

(12)

# DEMANDE DE BREVET EUROPEEN

(21) Numéro de dépôt: **86420144.7**

(22) Date de dépôt: **02.06.86**

(51) Int. Cl.⁴: **F 04 D 15/02**
**F 03 B 15/00**

(30) Priorité: **03.06.85 FR 8508507**

(43) Date de publication de la demande:
**07.01.87 Bulletin 87/2**

(84) Etats contractants désignés:
**CH DE FR GB LI**

(71) Demandeur: **NEYRPIC**
**75 rue du Général Mangin**
**F-38100 Grenoble(FR)**

(72) Inventeur: **Megnint, Lucien**
**46 Boulevard Foch**
**F-38000 Grenoble(FR)**

(74) Mandataire: **Karmin, Roger et al,**
**Cabinet MONNIER 150, cours Lafayette**
**F-69003 Lyon(FR)**

(54) Procédé de démarrage d'une pompe au moyen d'une pompe fonctionnant en turbine.

(57) Le procédé de démarrage d'une pompe consiste :

à pourvoir la volute d'alimentation (10) de la pompe fonctionnant en turbine (9), en amont de sa roue (9a), d'une vanne-fourreau (14) en soi connue, dont la virole (15) est déplaçable axialement;

à placer les viroles (15) des vannes-fourreau (14) en position d'obturation totale des passages amenant le liquide aux roues (8a, 9a) des deux machines hydrauliques ;

à déplacer progressivement la virole (15) de la vannefourreau 14 de la turbine (9, de manière à augmenter le débit de son liquide d'alimentation jusqu'à l'ouverture maximale à laquelle la synchronisation et la mise en charge s'effectuent en direction du moteur (13) de la pompe (8) ;

à déplacer progressivement la virole (14) du fourreau (15) de la pompe (8) dans le sens de l'ouverture afin qu'elle refoule le liquide ;

à brancher l'alimentation du moteur (13) de la pompe (8) sur le réseau et déconnecter celle en provenance de l'alternateur (11) de la turbine (9) ;

et à refermer la vanne fourreau (14) de la turbine (9) afin de provoquer l'arrêt de sa rotation.

Fig. 2

EP 0 207 866 A1

On connaît par le brevet suisse 414 353 une machine hydraulique comprenant une roue de pompe entraînée par un moteur électrique, l'arbre d'entraînement de la pompe, étant associé à une roue de turbine de manière que celle-ci soit d'abord mise en rotation par l'eau contenue dans la conduite de refoulement de la pompe. Une fois que la roue de turbine arrive à la vitesse synchrone du rotor du moteur électrique d'entraînement de la pompe celui-ci est enclenché sur le réseau d'alimentation. Dans le document en question, une vanne fourreau usuelle peut isoler la turbine tandis qu'une seconde vanne fourreau entoure le roue de la pompe pour l'isoler si besoin est. En plus de la vanne fourreau, la bâche de la turbine est pourvue d'organes de garde et d'aubes directrices permettant l'arrêt ou la mise en route de la turbine pendant que la vanne fourreau est ouverte.

La vanne fourreau qui entoure la roue de la pompe permet son lancement en diminuant de manière considérable son couple de barbotage avant sa mise en synchronisme.

Le problème que vise à résoudre la présente invention est celui du démarrage d'une ou de plusieurs pompes par une autre pompe fonctionnant en turbine.

Le procédé pour le démarrage d'une pompe dans ces conditions consiste :

- à pourvoir la volute d'alimentation de la pompe fonctionnant en turbine et de la pompe, en amont de leurs roues, d'une vanne-fourreau en soi connue, dont la virole est déplaçable axialement ;

- à placer les viroles des vannes-fourreaux en position d'obturation totale des passages amenant le liquide aux roues des machines hydrauliques ;

- à déplacer progressivement la virole de la vanne-fourreau de la turbine, de manière à augmenter le débit de son liquide d'alimentation jusqu'à l'ouverture maximale à laquelle la synchronisation et la mise en charge s'effectuent en direction du moteur de la pompe ;

- à déplacer progressivement la virole du fourreau de la pompe dans le sens de l'ouverture afin qu'elle puisse refouler le liquide ;

- à brancher l'alimentation du moteur de la pompe sur le réseau et à déconnecter celle en provenance de l'alternateur de la turbine ;

- et à refermer la vanne fourreau de la pompe fonctionnant en turbine afin de provoquer l'arrêt de sa rotation.

Le dessin annexé, donné à titre d'exemple, permettra de mieux comprendre l'invention, les caractéristiques qu'elle présente et les avantages qu'elle est suceptible de procurer :

Fig. 1 illustre en section transversale une pompe pourvue d'une vannefourreau usuelle placée entre la périphérie de sa roue et sa volute de refoulement.

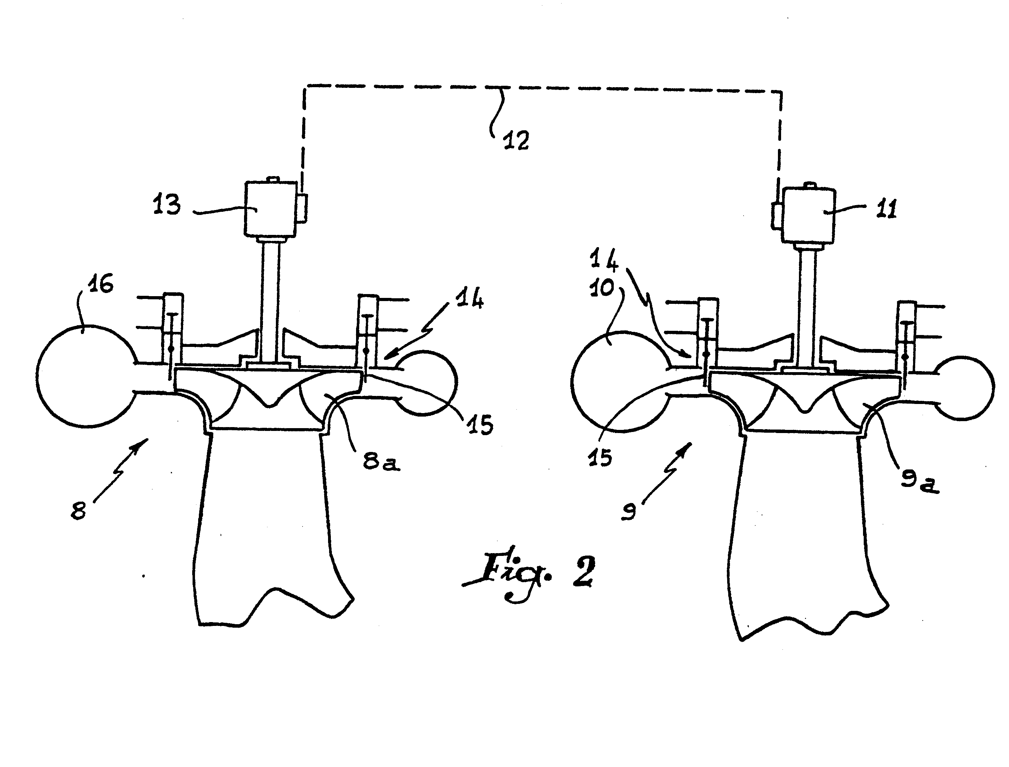

Fig. 2 montre schématiquement une pompe et une turbine, ces deux machines hydrauliques étant chacune pourvue d'une vanne-fourreau usuelle.

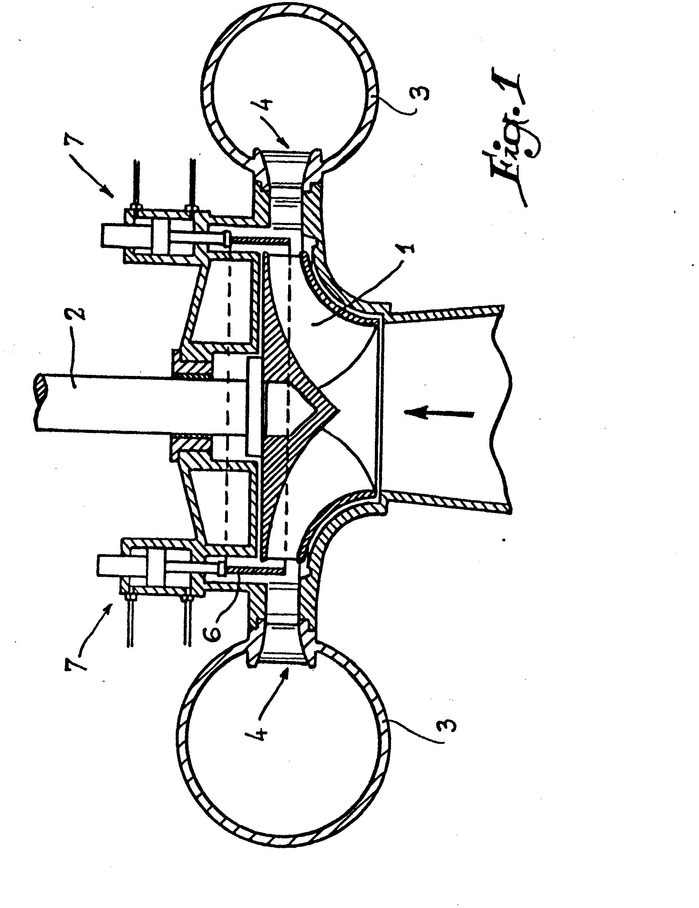

On a illustré en fig. 1 une machine pouvant fonctionner en pompe centrifuge ou en turbine. Elle comporte une roue 1 calée à l'extrémité inférieure d'un arbre vertical 2. La roue est placée en gros dans le plan médian d'une bâche en spirale 3 avec laquelle elle communique par des passages 4. Autour de la périphérie de la roue 1 est placée une vanne-fourreau dont la virole 6 actionnée par des vérins 7 permet de fermer le passage 4.

On comprend aisément qu'il suffit de faire tourner la roue 9a de la pompe-turbine 9 par l'introduction progressive de l'eau de la conduite forcée dans la bâche 10 pour produire du courant à la sortie d'un alternateur 11 calé sur son arbre. Par une ligne d'alimentation 12, l'alternateur 11 amène du courant aux bornes du moteur 13 de la pompe 8 de telle sorte que sa roue 8a tourne.

Il va de soi que la roue de la pompe 8 doit être mise en eau morte comme indiqué précédemment en référence à fig. 1, de telle sorte qu'on utilise une vanne-fourreau 14 dont la virole 15 ferme le passage d'arrivée d'eau entre la bâche 16 de la pompe et sa roue 8a pendant la mise en rotation de cette dernière.

En ce qui concerne la pompe fonctionnant en turbine, on exige que celle-ci soit la plus simple possible et on désire supprimer tous ses organes de réglage et de garde.

Conformément à l'invention, on remplace ceux ci par une vanne-fourreau en soi connue 14, dont la virole 15 ouvre progressivement le passage à l'eau contenue dans la conduite de refoulement de la pompe 8 et dont une dérivation aboutit à la bâche 10. L'ouverture progressive de la virole 15 permet la mise en vitesse de la roue 9a de la turbine jusqu'à ce que l'alternateur 11 alimente le moteur 13 à sa vitesse de synchronisme. A ce moment, on enclenche celui-ci sur le réseau d'alimentation électrique, l'on ouvre la virole 15 de sa vanne 14 de manière que la pompe fonctionne, et l'alimentation électrique du moteur 13 par l'alternateur 11 est supprimée.

Simultanément, la virole 15 de la vanne 14 de la turbine 9 est progressivement fermée, de manière à isoler la turbine et à permettre son arrêt.

On a donc réalisé suivant l'invention une pompe fonctionnant en turbine dont le réglage du débit ne se fait que par la vanne-fourreau, de sorte qu'on peut supprimer son distributeur et ses organes de garde, la vanne-fourreau fonctionnant alors en organe de réglage et de garde.

On peut appliquer le procédé de démarrage suivant l'invention à une station de pompage, c'est-à-dire comportant plusieurs groupes moto-pompe.

Si les pompes sont démarrées normalement par un convertisseur statique de fréquence, en cas de panne du convertisseur, le démarrage des pompes est impossible, sauf si l'on prévoit un deuxième convertisseur de secours, ce qui est onéreux. De plus, un tel convertisseur, s'il s'applique à une station de pompage dont la puissance absorbée est importante, est extrêmement encombrant.

Grâce à l'invention, on peut atteindre ces buts et utiliser une pompe fonctionnant en turbine simplifiée ne comportant pas de vanne sphérique ou de vanne papillon et dont l'alimentation de la roue est particulièrement avantageuse puisqu'elle s'effectue de manière axi-symétrique pendant les phases de démarrage et d'arrêt.

De plus, l'utilisation d'une vanne fourreau pour le démarrage d'une pompe permet de diminuer le frottement fluide, donc la puissance de barbotage.

**Revendication**

Procédé de démarrage d'au moins une pompe (8) au moyen d'une autre pompe fonctionnant en turbine (9) dont l'alternateur (11) alimente le moteur synchrone (13) de la pompe (8) jusqu'au synchronisme afin qu'alors ce moteur soit directement alimenté par le réseau, lesdites pompes (8, 9) étant pourvues d'une vanne-fourreau (14) déplaçable axialement pour permettre de réduire le couple de barbotage, caractérisé en ce qu'il consiste :

- à pourvoir la volute d'alimentation (10) de la pompe fonctionnant en turbine (9), en amont de sa roue (9a), d'une vanne-fourreau (14) en soi connue, dont la virole (15) est déplaçable axialement ;

- à placer les viroles (15) des vannes-fourreau (14) en position d'obturation totale des passages amenant le liquide aux roues (8a, 9a) des deux machines hydrauliques ;

- à déplacer progressivement la virole (15) de la vanne-fourreau 14 de la turbine (9,) de manière à augmenter le débit de son liquide d'alimentation jusqu'à l'ouverture maximale à laquelle la synchronisation et la mise en charge s'effectuent en direction du moteur (13) de la pompe (8) ;

- à déplacer progressivement la virole (14) du fourreau (15) de la pompe (8) dans le sens de l'ouverture afin qu'elle refoule le liquide ;

- à brancher l'alimentation du moteur (13) de la pompe (8) sur le réseau et déconnecter celle en provenance de l'alternateur (11) de la turbine (9) ;

- et à refermer la vanne fourreau (14) de la turbine (9) afin de provoquer l'arrêt de sa rotation.

Fig.1

*Fig. 2*

Office européen
des brevets

**RAPPORT DE RECHERCHE EUROPEENNE**

Numéro de la demande

EP 86 42 0144

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-3 556 678 (A. OISHI et al.) * Colonne 2, en particulier lignes 10-41; figure 1; colonnes 3,4, en particulier colonne 4, lignes 45-60; figures 5-7 * | 1 | F 04 D 15/02 F 03 B 15/00 |
| D,Y | CH-A- 414 353 (ATELIERS CHARMILLES) * Page 1, lignes 39-69; figure 1; page 2, lignes 1-60; figure 4 * | 1 | |
| A | GB-A-2 031 518 (ASEA) * Résumé; figure * | 1 | |
| A | CH-A- 570 553 (ITUBAG) * Colonne 1, ligne 48 - colonne 2, ligne 47; figure 2 * | 1 | **DOMAINES TECHNIQUES RECHERCHES (Int. Cl.4)** |
| A | FR-A-2 166 788 (NEYRPIC) * Page 2; figure * | 1 | F 04 D 15/00 F 04 D 13/00 F 04 D 9/00 F 03 B 3/00 F 03 B 15/00 |

Le présent rapport de recherche a été établi pour toutes les revendications

| Lieu de la recherche | Date d'achèvement de la recherche | Examinateur |
|---|---|---|
| LA HAYE | 16-09-1986 | KAPOULAS T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82